# DEMANDE DE BREVET EUROPEEN

(11) **EP 1 398 482 A1**
(43) Date de publication de la demande: **17.03.2004**
(21) Numéro de dépôt: 03292252.8
(22) Date de dépôt: 12.09.2003
(51) Int. Cl.: F02D 41/10, F01L 9/04, F02D 13/02, F02B 37/20, F02B 69/00, F02B 41/00

(54) **Moteur suralimenté ayant un couple optimisé à bas régime**

(30) Priorité: 16.09.2002 FR 0211422
(71) Demandeur: Renault s.a.s., 92100 Boulogne Billancourt (FR)
(72) Inventeur: Christou, Panagiotis, 94300 Vincennes (FR)
(74) Mandataire: Rougemont, Bernard

(57) **Abrégé**

Un moteur (1) suralimenté par un turbocompresseur (2) comporte des soupapes (15, 16) commandées sans came. Le moteur (1) est piloté pendant une phase transitoire à forte charge et à faible régime de telle sorte que l'échappement soit simultané pour au moins un groupe d'au moins deux cylindres synchrones, et créer ainsi de fortes bouffées de gaz d'échappement reçues par le turbocompresseur (2).

## Description

L'invention concerne un moteur suralimenté ayant un couple optimisé à bas régime, et son procédé de commande.

Les moteurs suralimentés par turbocompresseur utilisent l'énergie fournie par les gaz d'échappement pour faire tourner une turbine. Cette turbine entraîne un compresseur qui comprime l'air alimentant le moteur pour obtenir un gain de couple et de puissance, en comparaison avec un moteur atmosphérique. Cependant, ces moteurs ont souvent le défaut de fournir un couple relativement faible à bas régime, en particulier après un fonctionnement à faible charge. En effet, à faible charge et bas régime, la turbine reçoit peu d'énergie et sa vitesse de rotation est faible, ce qui ne permet pas de comprimer l'air d'alimentation. Lors d'une demande de puissance à partir de ce point de fonctionnement, on observe une phase transitoire pendant laquelle la vitesse de rotation de la turbine augmente progressivement. Pendant toute cette phase transitoire, la vitesse de rotation de la turbine n'est pas encore suffisante pour obtenir une compression significative de l'air, ce qui ne permet pas le remplissage maximal des cylindres du moteur en air d'alimentation. De ce fait, la quantité de carburant qu'il est possible de brûler n'est pas maximale et le couple fourni par le moteur n'est pas non plus maximal. De plus, la quantité de gaz d'échappement, et donc l'énergie récupérable par la turbine, n'est pas encore maximale, du fait de la moindre quantité d'air admis.

De plus, même lorsque la turbine a atteint un régime stabilisé, les bouffées de gaz d'échappement ont tendance à s'amortir dans le délai entre deux bouffées. Ainsi, le niveau de fonctionnement de la turbine est plus bas que lorsque le moteur tourne à haut régime.

Il a été proposé un moteur suralimenté avec un turbocompresseur de dimensions réduites. Ainsi, l'inertie en rotation de la turbine est plus faible et sa charge pour entraîner le compresseur est également plus faible. Ainsi, le turbocompresseur atteint plus rapidement un régime de rotation efficace, ce qui diminue la durée de la phase transitoire pour atteindre un couple satisfaisant. Pour éviter par contre que la turbine ne crée un étranglement pour l'évacuation des gaz d'échappement à haut régime du moteur, il est prévu une voie d'échappement en parallèle avec la turbine, obturée sur commande par une vanne pour créer un flux de gaz d'échappement à haut régime. Cette voie supplémentaire d'échappement est également connue sous le nom anglais de « waste gate ». Cependant, le taux de suralimentation est limité pour ce moteur.

On connaît également par le document US 3.423.926 un turbocompresseur dont la volute de la turbine est divisée en deux pour recevoir le flux de gaz d'échappement d'une partie des cylindres dans l'une des demi-volutes, et de l'autre partie des cylindres dans l'autre demi-volute. En outre, un volet met en communication sur commande les entrées des deux demi-volutes. L'effet recherché est d'obtenir, quand le moteur fonctionne à bas régime, des bouffées de gaz d'échappement arrivant à la turbine avec un débit instantané important pour faire fonctionner la turbine à un point de fonctionnement où son rendement est élevé. Ainsi, avec le volet fermé, la turbine conserve une vitesse de rotation plus importante que dans le cas d'une volute simple. A haut régime, le volet à l'entrée de la volute est ouvert pour que les bouffées de gaz d'échappement soit plus étalées dans le temps et que la turbine ne soit pas un goulet d'étranglement pour l'écoulement des gaz d'échappement.

Cependant, les conduits d'échappement entre les cylindres et la turbine doivent rester séparés jusqu'au volet, ce qui conduit à un encombrement important. De plus, la turbine à double volute est plus onéreuse qu'une turbine avec une volute simple.

C'est donc un objectif de l'invention de fournir un moteur suralimenté ayant une phase transitoire réduite après un fonctionnement à faible charge et bas régime, et fournissant rapidement un couple important.

L'invention a donc pour objet un moteur suralimenté par un turbocompresseur, comportant au moins un groupe de deux cylindres synchrones montés sur un vilebrequin avec la même position angulaire, une tubulure d'échappement reliant chaque cylindre au turbocompresseur, chaque cylindre comportant au moins une soupape d'admission, et au moins une soupape d'échappement libérant sur commande le passage entre le cylindre et la tubulure, les soupapes des cylindres d'un groupe étant commandées en fonctionnement normal pour que l'un des cylindres synchrones soit en phase de compression quand l'autre est en phase d'échappement, caractérisé en ce que les soupapes sont à commande sans came et, pendant une phase transitoire quand le moteur fonctionne à forte charge et à bas régime, les soupapes des deux cylindres synchrones sont commandées pour que les phases d'échappement des deux cylindres soient simultanées et pour créer ainsi de fortes bouffées de gaz d'échappement reçues par le turbocompresseur par l'intermédiaire de la tubulure.

Grâce à l'invention, les flux de gaz d'échappement de deux cylindres synchrones sont réunis pour former une bouffée arrivant à la turbine du turbocompresseur. Comme il est bien connu dans la technique, cette bouffée est bien plus efficace pour entraîner la turbine que la même quantité de gaz d'échappement répartie en deux bouffées successives. Ainsi, pendant la phase transitoire, la turbine est entraînée de manière plus efficace. Elle a donc une plus forte accélération en rotation, ce qui réduit la durée de la phase transitoire.

Dans un mode de réalisation particulier, le moteur comporte quatre cylindres et deux groupes de deux cylindres synchrones, les deux groupes étant décalés d'un demi-tour sur le vilebrequin. Classiquement, un tel moteur est commandé pour qu'à chaque demi-tour, un nouveau cylindre soit en phase d'échappement. Dans la phase transitoire, au contraire, un premier groupe de deux cylindres est en phase d'échappement, puis, après un tour et demi de vilebrequin, le deuxième groupe est en phase d'échappement. Un nouveau cycle recommence tous les deux tours de vilebrequin.

L'invention a aussi pour objet un procédé de commande d'un moteur suralimenté par un turbocompresseur, comportant au moins un groupe de deux cylindres synchrones montés sur le vilebrequin avec la même position angulaire, chaque cylindre comportant au moins une soupape d'admission, et au moins une soupape d'échappement libérant sur commande le passage entre le cylindre et une tubulure, procédé dans lequel les soupapes des deux cylindres synchrones sont commandées en fonctionnement normal pour que l'un des cylindres soit en phase de compression quand l'autre est en phase d'échappement, caractérisé en ce que, pendant une phase transitoire quand le moteur fonctionne à forte charge et à bas régime, on commande les soupapes des deux cylindres synchrones pour que les phases d'échappement des deux cylindres soit simultanées et pour créer ainsi de fortes bouffées de gaz d'échappement reçues par le turbocompresseur.

L'invention sera mieux comprise et d'autres particularités et avantages apparaîtront à la lecture de la description qui va suivre, la description faisant référence aux dessins annexés parmi lesquels :
- la figure 1 est une vue schématique d'un moteur suralimenté par un turbocompresseur ;
- la figure 2 est une vue schématique du moteur en coupe selon la ligne II-II de la figure 1 ;
- la figure 3 est un diagramme temporel de la pression à l'entrée de la turbine selon deux modes de commande du moteur.

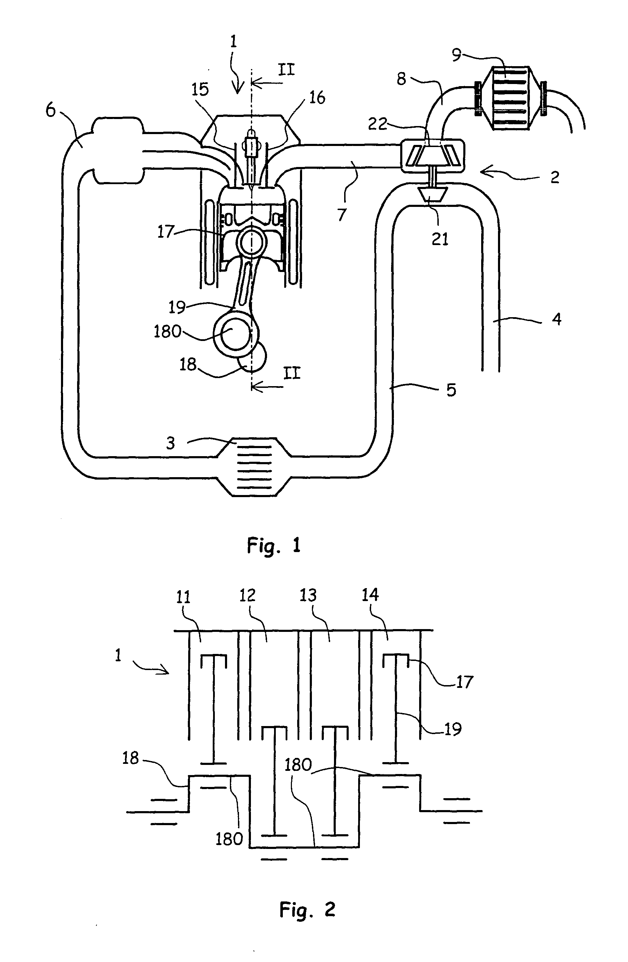

Le moteur schématisé sur les figures 1 et 2 comporte un bloc moteur 1, un turbocompresseur 2 et un radiateur 3. Le bloc moteur 1 comporte quatre cylindres 11, 12, 13, 14 dans lesquels quatre pistons 17 coulissent de manière classique. Le turbocompresseur comporte un compresseur 21 qui peut comprimer de l'air admis par un conduit d'entrée 4 et le refouler par une tubulure de refoulement 5. La tubulure de refoulement 5 est reliée au radiateur 3. Une tubulure d'admission 6 relie le radiateur 3 à chacun des cylindres. Une tubulure d'échappement 7 relie chaque cylindre à une turbine 22 du turbocompresseur 2. Un conduit d'échappement 8 est issu de la turbine pour conduire de manière classique des gaz d'échappement vers un pot catalytique 9 et un pot de détente, non représenté.

Le moteur comporte en outre des soupapes d'admission 15 et d'échappement 16. Plus précisément, chaque cylindre 11, 12, 13, 14 comporte une ou deux soupapes d'admission 15 permettant de mettre en communication la tubulure d'admission 6 avec le cylindre 11, 12, 13, 14, et une ou deux soupapes d'échappement 16 permettant de mettre en communication le cylindre avec la tubulure d'échappement 7. Pour la mise en oeuvre de l'invention, les soupapes 15, 16 sont sans came, c'est à dire que l'ouverture et la fermeture des soupapes peuvent être pilotées à des instants variables en fonction du point de fonctionnement du moteur.

De manière classique, les pistons 17 sont reliés à un vilebrequin par des bielles 19 sur des manetons 180 excentrés. Comme le montre la figure 2, les manetons des cylindres 12 et 13 sont décalés de 180° par rapport aux manetons des cylindres 11 et 14, de telle sorte que les mouvements des pistons coulissant dans les cylindres 12 et 13 sont en opposition par rapport à ceux des pistons coulissant dans les cylindres 11 et 14 lors de la rotation du vilebrequin.

Lors du fonctionnement normal du moteur, chaque cylindre passe dans quatre phases successives pendant que le vilebrequin tourne de deux tours. Ces phases, appelés également temps, sont l'admission, pendant que le piston 17 descend dans le cylindre, la compression, pendant que le piston 17 remonte dans le cylindre, la détente et finalement l'échappement. Lors de la rotation du vilebrequin, la même phase se retrouve successivement à chaque demi-tour sur chacun des cylindres. Typiquement, la même phase apparaît successivement sur les cylindres 11, 13, 14 et finalement 12, avant de commencer un nouveau cycle.

Lorsque le moteur tourne à bas régime, sans demande importante de couple, il est commandé tel que décrit précédemment. Par contre, dès qu'une demande importante de couple est transmise, par exemple par l'appui sur un accélérateur, le procédé selon l'invention est mis en oeuvre pendant une période transitoire, pour obtenir une mise en régime rapide du turbocompresseur, et un niveau de fonctionnement élevé. Pour cela, le mouvement des soupapes d'admission et d'échappement d'un premier groupe de cylindres, formé par les cylindres 11 et 14, est commandé en synchronisme, pour que les phases des cylindres soient simultanées. De même, un deuxième groupe est formé par les cylindres 12 et 13, les soupapes de ce deuxième groupe étant commandées également de manière synchrone.

Ainsi, la phase d'échappement se produit simultanément pour les deux cylindres du premier groupe. Elle se produit également simultanément pour les deux cylindres du deuxième groupe, avec un décalage soit d'un demi-tour de vilebrequin, soit d'un tour et demi, selon le décalage relatif qui aura été choisi pour commander les cylindres.

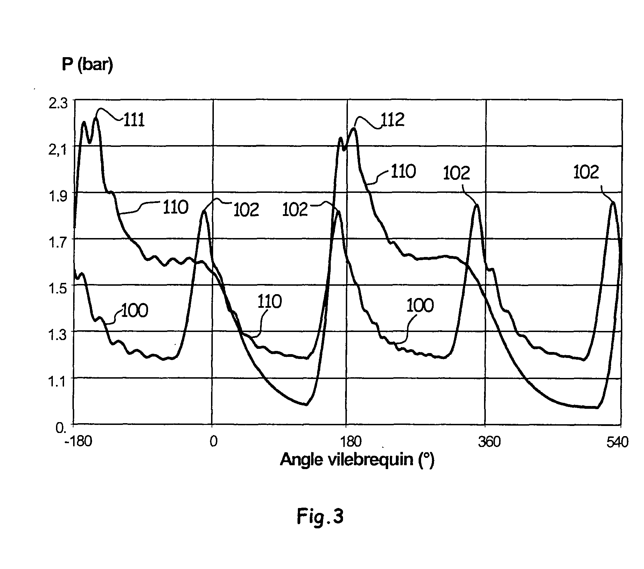

La figure 3 montre la pression avant la turbine lorsque le moteur tourne à 1200 tr/min (min⁻¹) et à pleine charge. Une première courbe 100 correspond au mode de fonctionnement classique, tandis qu'une deuxième courbe 110 correspond au mode de fonctionnement selon l'invention pendant la période transitoire.

La première courbe 100 comporte quatre pics de pression 102, correspondant au passage des gaz d'échappement issus de chacun des cylindres. Ces pics sont régulièrement espacés, avec une amplitude de l'ordre 1,8 bar.

La deuxième courbe 110 par contre comporte deux pics, un premier pic 111 et un deuxième pic 112. Le premier pic 111 correspond au flux de gaz issu du premier groupe de cylindres 11, 14, tandis que le deuxième pic correspond au flux de gaz issu du deuxième groupe de cylindres 12, 13. On constate que la pression maximale atteinte est de l'ordre de 2,2 bar, soit un niveau supérieur au mode de fonctionnement normal. L'efficacité de la turbine est ainsi améliorée. Elle atteint une vitesse de rotation plus élevée dans le cas du fonctionnement en phase transitoire selon le procédé de l'invention. Le gain de couple pendant cette phase est de l'ordre de 15 %, avec un rendement sensiblement amélioré.

## Revendications

1. Moteur suralimenté par un turbocompresseur (2), comportant au moins un groupe de deux cylindres synchrones (11, 14 ; 12, 13) montés sur un vilebrequin (18) avec la même position angulaire, une tubulure d'échappement (7) reliant chaque cylindre (11, 12, 13, 14) au turbocompresseur (2), chaque cylindre comportant au moins une soupape d'admission (15), et au moins une soupape d'échappement (16) libérant sur commande le passage entre le cylindre (11, 12, 13, 14) et la tubulure (7), les soupapes (15, 16) des cylindres d'un groupe étant commandés en fonctionnement normal pour que l'un des cylindres synchrones soit en phase de compression quand l'autre est en phase d'échappement, **caractérisé en ce que** les soupapes (15, 16) sont à commande sans came et, pendant une phase transitoire quand le moteur fonctionne à forte charge et à bas régime, les soupapes des deux cylindres (11, 14 ; 12, 13) synchrones sont commandées pour que les phases d'échappement des deux cylindres soient simultanées et pour créer ainsi de fortes bouffées de gaz d'échappement reçues par le turbocompresseur (2) par l'intermédiaire de la tubulure (7).

2. Moteur selon la revendication 1, **caractérisé en ce qu'**il comporte quatre cylindres (11, 12, 13, 14) et deux groupes de deux cylindres synchrones, les deux groupes étant décalés d'un demi-tour sur le vilebrequin (18).

3. Procédé de commande d'un moteur suralimenté par un turbocompresseur (2), comportant au moins un groupe de deux cylindres (11, 14 ; 12, 13) synchrones montés sur le vilebrequin (18) avec la même position angulaire, chaque cylindre comportant au moins une soupape d'admission (15), et au moins une soupape d'échappement (16) libérant sur commande le passage entre le cylindre et une tubulure (7), procédé dans lequel les soupapes (15, 16) des deux cylindres (11, 14 ; 12,13) synchrones sont commandées en fonctionnement normal pour que l'un des cylindres soit en phase de compression quand l'autre est en phase d'échappement, **caractérisé en ce que**, pendant une phase transitoire quand le moteur fonctionne à forte charge et à bas régime, on commande les soupapes (15, 16) des deux cylindres synchrones pour que les phases d'échappement des deux cylindres soit simultanées et pour créer ainsi de fortes bouffées de gaz d'échappement reçues par le turbocompresseur (2).
